**Europäisches Patentamt**

**European Patent Office**

**Office européen des brevets**

(19)

(11) Veröffentlichungsnummer : **0 160 154**
**B1**

(12) **EUROPÄISCHE PATENTSCHRIFT**

(45) Veröffentlichungstag der Patentschrift :
**08.07.87**

(21) Anmeldenummer : **84730045.6**

(22) Anmeldetag : **28.04.84**

(51) Int. Cl.⁴ : **C 09 J 7/04, C 08 J 3/14**

(54) **Papierhaftklebeband zum Restaurieren, Konservieren und Montieren von Papiersubstraten.**

(43) Veröffentlichungstag der Anmeldung :
**06.11.85 Patentblatt 85/45**

(45) Bekanntmachung des Hinweises auf die Patenterteilung : **08.07.87 Patentblatt 87/28**

(84) Benannte Vertragsstaaten :
**BE DE FR IT NL**

(56) Entgegenhaltungen :
**FR-A- 2 177 919**
**FR-A- 2 356 706**
**US-A- 3 692 878**
**US-A- 4 057 527**

(73) Patentinhaber : **Hans Neschen GmbH & Co. KG**
**Windmühlenstrasse 6**
**D-3062 Bückeburg (DE)**

(72) Erfinder : **Hauber, Rüdiger, Dr.**
**Röntgenstrasse 64**
**D-3062 Bückeburg (DE)**

(74) Vertreter : **Eikenberg & Brümmerstedt Patentanwälte**
**Schackstrasse 1**
**D-3000 Hannover 1 (DE)**

## Beschreibung

Die Erfindung betrifft ein Papierhaftklebeband zum Restaurieren, Konservieren und Montieren von Papiersubstraten, enthaltend ein transparentes bis opakes Trägerpapier mit einem Gewicht von 10-50 g/m², das einseitig mit einer Selbstklebemasse beschichtet ist, wobei die beschichtete Seite des Bandes ggfs. mit einem silikonisierten Trennpapier abgedeckt ist.

Diese Klebebänder kommen in großem Umfang in Bibliotheken, Büchereien und Archiven zum Einsatz, wo oftmals Bücher, Dokumente, Karten, Graphiken, Stiche und andere papierne Archivalien lagern, die beschädigt sind und repariert werden müssen oder die eine Konservierung erfordern. So können mit diesen Klebebändern beispielsweise eingerissene Seiten, die bei häufig benutzten Büchern nicht zu vermeiden sind, nahezu unsichtbar repariert werden. Ebenso lassen sich mit ihnen Blattseiten ganzflächig einbetten, ausgerissene Seiten in ein Buch einkleben, Einzelseiten zu Buchlagen für die Fadenheftung verbinden, schadhafte Ränder von Schriftstücken ausbessern oder Buchgelenke innen streifenverstärken. Aber auch in anderen Bereichen werden diese Klebebänder sehr häufig benutzt, beispielsweise von Kunsthändlern und Bilderrahmern zum Befestigen der Drucke, Graphiken, Gemälde, Aquarelle oder Photos am Passepartout und zum Hinterkleben bzw. Verschließen der Bildrückseite nach dem Einstiften, damit das gerahmte Bild gegen das Eindringen von Staubpartikeln und Insekten geschützt ist.

Für alle diese Zwecke ist es wichtig, daß der Träger der Klebebänder ein Papier ist, denn Trägerfolien sind ungeeignet. Bevorzugt werden alterungsbeständige Papiersorten, die durch gleichmäßige Verfilzung von verhältnismäßig langen Fasern eine hohe Reißfestigkeit und Zähigkeit besitzen. In der Praxis hat es sich dabei als zweckmäßig erwiesen, für das Trägerpapier zwei unterschiedliche Papierstärken vorzusehen, nämlich ein sehr dünnes, transparentes Papier mit einem Gewicht von etwa 10-30 g/m², mit dem sich nahezu unsichtbare Verklebungen ausführen lassen, und ein etwas stärkeres, opakes Papier mit einem Gewicht von etwa 30-50 g/m², das für solche Verklebungen benutzt werden kann, die höheren Belastungen standhalten müssen.

Neben dem Trägerpapier muß auch die Selbstklebemasse des Bandes besondere Anforderungen erfüllen. Sie soll eine gute Sofortklebkraft auf Papieren, eine gute Kohäsion (innere Festigkeit) und eine möglichst hohe Alterungsbeständigkeit aufweisen. Weiterhin wird seit neuerer Zeit aber auch gewünscht, daß die Selbstklebemasse einerseits gegenüber üblichen Luftfeuchtigkeits- und Temperaturschwankungen in nicht klimatisierten Räumen unempfindlich ist und konstante Klebeeigenschaften zeigt, andererseits aber selbst nach längerer Verklebungszeit in Wasser dispergierbar ist, ohne die verklebten Substrate durch Faserausriß zu verletzen. Die Selbstklebemassen der bisher bekannten Papierhaftklebebänder haben zwar die geforderten Klebeeigenschaften und sind im allgemeinen auch ausreichend alterungsbeständig, lassen sich jedoch nicht in Wasser dispergieren, so daß ein einmal verklebtes Band nicht mehr vom Substrat abgelöst werden kann.

Dispergierbare oder wasserlösliche Selbstklebemassen sind an sich bekannt, sie werden im allgemeinen für wasserablösbare Selbstklebeetiketten und doppelseitig klebende Papierbänder verwendet. Beispielsweise erläutern die DE-PSen 2 214 293 und 2 236 575 dispergierbare Selbstklebemassen für Etiketten auf Basis von Acrylsäureestercopolymerisaten, Alkalisalzen von Polyacrylsäuren und Polyvinylmethyläthern. Dispergierbare und wasserlösliche Selbstklebemassen für doppelseitig klebende Bänder zum Endlosmachen von Papierbahnen beschreiben verschiedene Patentschriften. Diese Selbstklebemassen bestehen aus einem Gemisch von Polyvinylpyrrolidon mit Vernetzungsmitteln und Polyolen oder Polyalkylglykoläthern als Weichmacher (US-PS 3 096 202), aus epoxydierten kautschukartigen Polymeren mit wasserlöslichen sekundären Monoaminen (US-PS 3 661 874), aus einem Umsetzungsprodukt (Partialester) eines Methylvinyläther-Maleinsäureanhydrid-Copolymerisates mit einem Alkylphenolpolyglykoläther und nicht umgesetzten Alkylphenolpolyglykoläther als Weichmacher (DE-PS 2 311 746), aus einem Gemisch von Acrylsäure-Alkoxyalkylacrylatcopolymerisaten und Polyethylenglykolderivaten sowie Polyethylenglykolen und -propylenglykolen als Weichmacher (US-PS 3 441 430), aus Acrylsäure-Acrylsäureester-Copolymerisaten neutralisiert mit Alkanolaminen, weichmachenden Polyoxyethylenverbindungen und sauren, mit Alkanolaminen neutralisierten Kolophoniumharzen (DE-OS 2 360 441), aus Acrylsäure-Acrylsäureester-Copolymerisaten partiell neutralisiert mit Natronlauge und tertiären, ethoxylierten N-Alkyl-alkandiamin (DE-PS 2 904 233) oder aus Acrylsäureester-Vinylcarbonsäure-Copolymerisaten mit ethoxylierten (Alkyl-)Phenolen und ethoxylierten Alkylmono- und -diaminen, wobei die Säure im Copolymerisat überwiegend mit Kaliumhydroxid neutralisiert ist (EP-PS 58 382).

Unter diesen bekannten Selbstklebemassen unterschiedlicher Zusammensetzung befindet sich keine Version, die den Anforderungen eines hochwertigen Papierhaltklebebandes entspricht. Zwar sind alle diese Selbstklebemassen dispergierbar oder wasserlöslich, aber sie besitzen keine ausreichende Alterungsbeständigkeit. Außerdem sind die wasserlöslichen Typen meistens so stark wasserlöslich, daß bei hohen Luftfeuchtigkeiten die Verklebungsstelle angelöst wird, während die dispergierbaren Typen auf Papiersubstraten so stark aufziehen, daß sie beim Redispergieren teilweise die Substrate durch Faserausriß beschädigen.

Es ist deshalb das Ziel der Erfindung, ein Papierhaftklebeband zu schaffen, das die erforderlichen Klebeigenschaften besitzt, zugleich aber auch hohe Anforderungen sowohl an die Alterungsbeständigkeit als auch an die Dispergierbarkeit erfüllt.

Dieses Ziel wird erfindungsgemäß dadurch erreicht, daß die Selbstklebemasse aus

60-85 Gewichtsteilen Copolymerisaten aus 50-90 Gew.-% Acrylsäureestern, deren Alkoholkomponente 2 bis 12 C-Atome besitzt, und 10-50 Gew.-% Styrol,

5-20 Gewichtsteilen Alkalisalzen von Polyacrylsäuren,

3-15 Gewichtsteilen Primärweichmachern auf Basis von Alkylbenzylphthalaten,

5-15 Gewichtsteilen Alkylphenolpolyglykoläthern und

1-4 Gewichtsteilen Calciumcarbonat

zusammengesetzt ist, wobei die Summe aller Bestandteile jeweils 100 Gewichtsteile ausmacht.

Die Erfindung beruht auf der überraschenden Erkenntnis, daß sich mit Copolymerisatdispersionen auf der Basis von Acrylsäureestern und Styrol, die mit den vorerwähnten weiteren Zusätzen versehen sind, Selbstklebemassen mit der für Papierhaftklebebänder geforderten Kombination von Eigenschaften ergeben. Die mit diesen Selbstklebemassen hergestellten Papierhaftklebebänder besitzen eine gute Sofortklebekraft auf Papieren und eine gute Kohäsion (innere Festigkeit). Sie sind auch außerordentlich alterungsbeständig und lassen sich andererseits selbst nach langer Verklebungszeit problemlos in Wasser dispergieren. Damit hat die Erfindung erstmals ein allen Anforderungen der Praxis gerecht werdendes Papierhaftklebeband zur Verfügung gestellt.

Die Klebstoffgrundlage für das erfindungsgemäße Papierhaftklebeband ist das Copolymerisat aus Acrylsäureestern, deren Alkoholkomponente 1-12 C-Atome besitzt, mit einem Anteil von 10-50 Gew.-% Styrol. Es wurde gefunden, daß diese Klebstoffgrundlage außerordentlich alterungsbeständig ist. Die Alterungsbeständigkeit wird im allgemeinen nach dem sog. « Temperaturlagerungstest » bewertet. Dabei wird ein mit dem Klebeband verklebtes Substrat (z. B. ein Standardpapier) mehrere Tage lang (normalerweise 3 Tage lang) bei 105 °C gelagert, und die Alterungsbeständigkeit gilt als gegeben, wenn die Selbstklebemasse nach dieser Lagerung sich weder nach gelb oder braun verfärbt noch die Papiere durchfettet. Das erfindungsgemäße Klebeband besteht selbst bei einer Temperaturlagerzeit von 6 Tagen diesen Test erfolgreich, was besonders hohen Ansprüchen an die Alterungsbeständigkeit entspricht.

Klebstoffgrundlagen auf der Basis von Acrylsäureesterpolymerisaten und -copolymerisaten ohne Styrolgehalt zeigen dieses vorteilhafte Verhalten nicht, sondern verfärben sich bei Temperaturlagerung leicht gelblich und haften außerdem nach längerer Lagerung bei Raumtemperatur auf Papiersubstraten so stark, daß sie sich kaum noch redispergieren lassen, ohne die Papierfasern zu beschädigen. Nicht geeignet sind auch Copolymerisatdispersionen, die neben Acrylsäureestern noch Vinylacetat enthalten, da auch diese Copolymerisate sich mit steigendem Vinylacetatgehalt bei Temperaturlagerung (6 Tage/105 °C) gelb bis braun verfärben.

Für die Zwecke der Erfindung geeignete Acrylsäureester-Styrol-Copolymerisatdispersionen können nach bekannten Verfahren durch radikalische Polymerisation der Monomeren in Wasser unter Verwendung geeigneter Emulgatoren und Ammonium- oder Kaliumperoxodisulfat als Initiator hergestellt werden. Entsprechende Polymerisationsverfahren sind beispielsweise in den DE-OSen 3 040 086, 3 118-593 und 3 119 967 beschrieben.

Normalerweise bilden Acrylsäureester-Styrol-Copolymerisatdispersionen nach der Trocknung auf Papieren oder Folien relativ feuchtigkeitsunempfindliche Filme mit geringem Wasseraufnahmevermögen (4-12 % Wasseraufnahme nach 24 Stunden Wasserlagerung gemäß DIN 53 495). Es wurde jedoch weiterhin gefunden, daß sich diese Filme gut in Wasser redispergieren lassen, wenn noch Alkalisalze von linearen Polyacrylsäuren (Molekulargewicht : 3 000-20 000) und Primärweichmacher auf Alkylbenzylphthalatbasis wie z. B. Butylbenzylphthalat oder Octylbenzylphthalat der Selbstklebemasse zugesetzt werden. Die üblichen Standard-Weichmacher Dibutylphthalat und Diisooctylphthalat sollten dagegen nicht eingesetzt werden, da sie bei Temperaturlagerung (6 Tage/105 °C) gelb werden und deutlich niedrigere Solvationskräfte als die Alkylbenzylphthalate aufweisen (Messung nach der Klarpunkt-Methode).

Die der Selbstklebemasse weiterhin zugesetzten Alkylphenolpolyglykoläther (auch als ethoxylierte Alkylphenoläther bezeichnet), vorzugsweise solche mit bis zu 10 C-Atomen im Alkylrest und mit einem HLB-Wert von 10-15, fungieren als Emulgatoren. Sie verbessern das Wasseraufnahmevermögen und damit die Redispergierbarkeit des Copolymerisats. Zugleich wirken sie aber auch als Weichmacher und erhöhen die Klebkraft und Soforthaftung (Anfaßklebkraft) im begrenzten Umfang. Die Alterungsbeständigkeit des Copolymerisats wird durch diesen Zusatz nicht nachteilig beeinflußt.

Schließlich dient das in die Selbstklebemasse feindispers eingeschlämmte Calciumkarbonat als Puffer, um Säuren zu neutralisieren, die eventuell während der natürlichen Alterung durch chemische Abbaureaktionen entstehen oder aus säurehaltigen Haftgründen in den Kleber migrieren und Verfärbungen hervorrufen können.

Mit steigendem Styrolgehalt im Copolymerisat nimmt die Klebkraft der Selbstklebemasse ab, so daß auch über den Styrolgehalt eine Klebkrafteinstellung vorgenommen werden kann. Bei Bedarf kann zur Klebkrafteinstellung aber auch noch Acrylnitril und/oder Acrylsäure in das Copolymerisat einpolymerisiert werden, da Nitril- und Carboxylgruppen die Klebeigenschaften verbessern. Jedoch darf der Gehalt an Acrylnitril und/oder Acrylsäure nicht zu hoch sein, weil sich die Selbstklebemasse sonst bei Temperaturla-

**0 160 154**

gerung (6 Tage/105 °C) gelb verfärbt. Erfindungsgemäß ist vorgesehen, daß von dem Styrolanteil im Copolymerisat 2-5 Gew.% durch Acrylnitril und/oder 2-8 Gew.% durch Acrylsäure ersetzt sein können. Dies bedeutet, daß eine Rezeptur, in der beispielsweise 20 Gew.% Styrolanteil vorgesehen ist und in der beispielsweise 3 Gew.% des Styrolanteils durch Acrylsäure ersetzt werden soll, dann einen Styrolanteil von 17 Gew.% und einen zusätzlichen Gehalt an 3 Gew.% Acylsäure aufweist.

Zur Herstellung des erfindungsgemäßen Klebebandes wird eine Acrylsäure-Styrol-Copolymerisatdispersion, die auch die beschriebenen weiteren Zusätze enthält, mit Ammoniakwasser schwach alkalisch eingestellt, auf das Trägerpapier aufgestrichen und getrocknet, wobei der Masseauftrag im trockenen Zustand im allgemeinen im Bereich von 15-14 g/m² liegt. Als Trägerpapiere kommen dabei die eingangs beschriebenen Papiertypen in Betracht, sofern sie auch die weitere Forderung erfüllen, daß sie sich beim Anfeuchten oder unter Einwirkung von Nässe nicht verspannen.

Zweckmäßig wird das Trägerpapier jedoch ebenfalls mit Calciumcarbonat (Zusatzmenge 0,3-5,0 Gew.%) auf einen pH-Wert von 7,5-9,0 eingestellt, sodaß es gegen eventuell auftretende Säuren abgepuffert ist und eine bessere Alterungsbeständigkeit besitzt. Säuren können in Papieren infolge ungünstiger Lagerung, Abbau der Zellulose, Zersetzung der Öle in Druckfarben, Säureanreicherung aus der Umluft im Lagerraum etc. entstehen. Ein derart abgepuffertes Papier muß alaunfrei sein, denn das (alkalische) Calciumcarbonat setzt sich in der Pulpe mit dem (sauren) Aluminiumsulfat zu Aluminiumhydroxid, Kohlensäure und Calciumsulfat um, also zu Stoffen, die keine Pufferwirkung gegen vorhandene oder entstehende Säuren mehr haben.

Die Erfindung wird durch folgende Beispiele näher erläutert, wobei sich die Angabe « Gew.-% » jeweils auf die Feststoffe ohne Wasser bezieht : ·

Beispiel 1

Rezeptur :

70 Gew.% Acrylatdispersion (Copolymerisat aus 45 % 2-Äthylhexylacrylat, 40 % Butylacrylat, 15 % Styrol)
12 Gew.% Kaliumsalz der Polyacrylsäure (Molekulargewicht 5 000-10 000)
8 Gew.% Octylbenzylphthalat
7 Gew.% Ethoxylierter Alkylphenoläther (HLB-Wert : 12)
3 Gew.% Calciumcarbonat

Die Rezepturbestandteile wurden zu einer ca. 50 %igen wäßrigen Suspension in einem Behälter mit Rührer vermischt und mit Ammoniak-Wasser (pH-Wert : 8,5-9,0) schwach alkalisch eingestellt. Die so hergestellte Dispersion einer Selbstklebemasse wurde auf ein ca. 25 μm starkes, schwach alkalisches (pH-Wert : 7,5-8,5), mit Calciumcarbonat gepuffertes, transparentes Spezialseidenpapier (Gewicht : ca. 20 g/m²) und auf ein entsprechendes 80 μm starkes, opakes Langfaserpapier (Gewicht : 40-45 g/m²) mittels eines üblichen Walzenauftragswerkes so aufgetragen, daß nach dem Trocknen im warmen Luftstrom (100-150 °C) eine Haftklebeschicht in einer Stärke von 20 bzw. 40 g/m² erhalten wurde. Das mit der Selbstklebemasse beschichtete Papier wurde auf der klebenden Seite noch mit einem silikonisierten Trennpapier (Gewicht : ca. 67 g/m²) abgedeckt und zu Rollen gewickelt.

Beispiel 2

Rezeptur :

75 Gew.% Acrylatdispersion (Copolymerisat aus 70 % Butylacrylat und 30 % Styrol)
10 Gew.% Natriumsalz der Polyacrylsäure (Molekulargewicht 4 000-12 000)
5 Gew.% Butylbenzylphthalat
9 Gew.% Ethoxylierter Alkylphenoläther (HLB-Wert : 13,5)
1 Gew.% Calciumcarbonat

Die Herstellung und Verarbeitung erfolgte gemäß Beispiel 1.

Beispiel 3

Rezeptur :

70 Gew.% Acrylatdispersion (Copolymerisat aus 90 % 2-Ethylhexylacrylat, 4 % Styrol, 2 % Acrylnitril, 4 % Acrylsäure)
12 Gew.% Natriumsalz der Polyacrylsäure (Molekulargewicht 4 000-10 000)
6 Gew.% Butylbenzylphthalat
10 Gew.% Ethoxylierter Alkylphenoläther (HLB-Wert : 13)
2 Gew.% Calciumcarbonat

4

Die Herstellung und Verarbeitung erfolgte gemäß Beispiel 1.

Beispiel 4

Rezeptur :

74 Gew.% Acrylatdispersion (Copolymerisat aus 75 % Butylacrylat und 25 % Styrol)
10 Gew.% Natriumsalz der Polyacrylsäure (Molekulargewicht 4 000-10 000)
5 Gew.% Butylbenzylphthalat
10 Gew.% Ethoxylierter Alkylphenoläther (HLB-Wert : 13,5)
1 Gew.% Calciumcarbonat

Die Herstellung und Verarbeitung erfolgte gemäß Beispiel 1.

Die nach den Beispielen 1-4 erhaltenen Klebebänder besaßen nach dem Ausstreichen und Trocknen eine Haftklebeschicht im pH-Bereich von 8,5-9,0. Nach einer Schnellalterung (durch 13-tägige Lagerung bei 105 °C) waren die pH-Werte auf 7,5-8,0 abgefallen. In allen Fällen zeichnete sich die Haftkleberschicht durch eine gute Klebkraft und Scherfestigkeit aus, haftete auf Papiersubstraten sofort (Anfaßklebkraft), war im verklebtem Zustand selbst nach 3-monatiger Lagerung (Normalklimalagerung) wieder in Wasser dispergierbar und zeigte nach Temperaturlagerung (6 Tage/105 °C) weder eine Verfärbung noch eine Durchfettung des Papiers.

## Patentansprüche

1. Papierhaftklebeband zum Restaurieren, Konservieren und Montieren von Papiersubstraten, enthaltend ein transparentes bis opakes Trägerpapier mit einem Gewicht von 10-50 g/m², das einseitig mit einer Selbstklebemasse beschichtet ist, wobei die beschichtete Seite des Bandes ggfs. mit einem silikonisierten Trennpapier abgedeckt ist, dadurch gekennzeichnet, daß die Selbstklebemasse aus

60-85 Gewichtsteilen Copolymerisaten aus 50-90 Gew.-% Acrylsäureestern, deren Alkoholkomponente 2 bis 12 C-Atome besitzt, und 10-50 Gew.-% Styrol,
5-20 Gewichtsteilen Alkalisalzen von Polyacrylsäuren,
3-15 Gewichtsteilen Primärweichmachern auf Basis von Alkylbenzylphthalaten,
5-15 Gewichtsteilen Alkylphenolpolyglykoläthern und
1-4 Gewichtsteilen Calciumcarbonat

zusammengesetzt ist, wobei die Summe aller Bestandteile jeweils 100 Gewichtsteile ausmacht.

2. Papierhaftklebeband nach Anspruch 1, dadurch gekennzeichnet, daß 2-8 Gew.-% des Styrolanteils in dem Copolymerisat durch Acrylsäure ersetzt sind.

3. Papierhaftklebeband nach Anspruch 1 oder 2, dadurch gekennzeichnet, daß 2-5 Gew.-% des Styrolanteils in dem Copolymerisat durch Acrylnitril ersetzt sind.

4. Papierhaftklebeband nach einem der Ansprüche 1-3, dadurch gekennzeichnet, daß die Acrylsäureesterkomponente in dem Copolymerisat Acrylsäurebutylester, Acrylsäure-2-äthylhexylester oder ein Gemisch von Acrylsäure-2-äthylhexylester und Acrylsäurebutylester ist.

5. Papierhaftklebeband nach einem der Ansprüche 1-4, dadurch gekennzeichnet, daß der Weichmacher Butylbenzylphthalat, Octylbenzylphthalat oder ein Gemisch aus Butylbenzylphthalat und Octylbenzylphthalat ist.

6. Papierhaftklebeband nach einem der vorhergehenden Ansprüche, dadurch gekennzeichnet, daß das Trägerpapier ein alaunfreies, schwach alkalisiertes, mit Calciumcarbonat auf einen pH-Wert von 7,5-8,5 gepuffertes Zellulosepapier ist.

## Claims

1. Paper-like adhesive tape for the restoration, conservation, and mounting of paper substrates, containing a transparent to opaque carrier paper having a weight of 10-50 g/m², which is coated on one sid with a self-adhesive mass, wherein the coated side of the tape is optionally covered with a siliconised separating paper, characterized in that the self-adhesive mass is composed of :

60-85 parts by weight % of a copolymer of 50-90 weight of acrylic acid esters, of which the alcohol components have
2-12 carbon atoms, and 10-50 weight % of styrene,
5-20 parts by weight of alkali salts of polyacrylic acids,
3-15 parts by weight of primary plasticisers based on alkyl benzyl phthalates polyglycol ethers, and

1-4 parts by weight of calcium carbonate,

wherein the sum of all the components amounts to 10 parts by weight.

2. Paper-like adhesive tape according to claim 1, characterised in that 2-8 weight % of the proportion of styrene in the copolymer is replaced by acrylic acid.

3. Paper-like adhesive tape according to claim 1 or 2, characterised in that 2-5 weight % of the proportion of styrene in the copolymer is replaced by acrylonitrile.

4. Paper-like adhesive tape according to any one of claims 1-3 characterised in that the acrylic acid ester component of the copolymer is acylic acid butyl ester, acrylic acid-2-ethylhexyl ester or a micture of acrylic acid-2-ethylhexyl ester and acrylic acid butyl ester.

5. Paper-like adhesive tape according to any one of claims 1-4 characterised in that the plasticiser is butyl benzyl phthalate, octyl benzyl phthalate, or a mixture of butyl benzyl phthalate and octyl benzyl phthalate.

6. Paper-like adhesive tape according to any one of the preceding claims, characterised in that the carrier paper is an alumfree weakly alkalinated cellulose paper buffered with calcium carbonate to a pH-value of 7.5-8.5.

## Revendications

1. Bande auto-adhésive à base de papier à utiliser pour la restauration, la conservation et le montage des substrats en papier, comportant un papier support, transparent à opaque, d'un poids de 10 à 50 g/m² qui est enduit, d'un côté, d'une masse auto-adhésive, le côté enduit étant éventuellement recouvert d'un papier transfert traité au silicone caractérisée en ce que la masse auto-adhésive se compose de :

60 à 85 parties en poids de produits de copolymérisation contenant de 50 à 90 % en poids d'acrylates, dont le composant alcool comprend de 2 à 12 atomes de carbone, et de 10 à 50 % en poids de styrolène,
5 à 20 parties en poids de sels alcalins d'acide polyacrylique,
3 à 15 parties en poids de plastifiant primaire à base de phtalates d'alkylbenzyle,
5 à 15 parties en poids d'oxyde d'alkylphénolpolyglycol, et
1 à 4 parties en poids de carbonate de calcium,

la somme de tous les composants formant 100 parties en poids.

2. Bande auto-adhésive à base de papier selon la revendication 1, caractérisée en ce que, dans le produit de copolymérisation, à 2 à 8 % en poids de la partie styrolène est substitué de l'acide acrylique.

3. Bande auto-adhésive à base de papier selon la revendication 1 ou 2, caractérisée en ce que, dans le produit de copolymérisation, à 2 à 5 % en poids de la partie styrolène est substitué de l'acrylonitrile.

4. Bande auto-adhésive à base de papier selon l'une des revendications 1 à 3, caractérisée en ce que, dans le produit de copolymérisation, le composant acrylate acide est de l'acrylate de butyle, de l'acrylate de 2-éthylhexyle ou un mélange d'acrylate de 2-éthylhexyle et d'acrylate de butyle.

5. Bande auto-adhésive à base de papier selon l'une des revendications 1 à 4, caractérisée en ce que le plastifiant est du phtalate de butylbenzyle, du phtalate d'octylbenzyle, ou un mélange de phtalate de butylbenzyle et de phtalate d'octylbenzyle.

6. Bande auto-adhésive à base de papier selon l'une des revendications précédentes, caractérisée en ce que le papier support est un papier cellulosique sans alun, faiblement alcalinisé et tamponné avec du carbonate de calcium à une valeur de pH de 7,5 à 8,5.